(19)

Europäisches
Patentamt

European
Patent Office

Office européen
des brevets

(11) **EP 2 327 475 A2**

(12) **EUROPEAN PATENT APPLICATION**

(43) Date of publication:
**01.06.2011 Bulletin 2011/22**

(51) Int Cl.:
**B01J 13/14** *(2006.01)*

(21) Application number: **10192266.4**

(22) Date of filing: **23.11.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **Baek, Kyung Hyun**<br>  **Uiwang-si, Gyeonggi-do (KR)**<br>• **Jun, Jung Bae**<br>  **Uiwang-si, Gyeonggi-do (KR)**<br>• **Ju, Jung Kyu**<br>  **Uiwang-si, Gyeonggi-do (KR)** |
| (30) Priority: **25.11.2009 KR 20090114763** | (74) Representative: **Bublak, Wolfgang**<br>**Bardehle Pagenberg**<br>**Galileiplatz 1**<br>**81679 München (DE)** |
| (71) Applicant: **Cheil Industries Inc.**<br>**Uiwang-si, Gyeonggi-do (KR)** | |

(54) **Thermally-expandable microspheres having good foaming characteristics and uniform microsphere diameter and methods of preparing the same**

(57)     The present invention provides a thermally expandable microsphere having a core-shell structure comprising: a shell including a thermoplastic polymer and a long-chain crosslinking agent having a weight-average molecular weight between cross-linking sites of more than about 500; and a core including a foaming agent. The thermally expandable microsphere of the present invention can have excellent foaming characteristics and an even (uniform) microsphere diameter.

EP 2 327 475 A2

**Description**

The present invention relates to thermally expandable microspheres and methods of preparing the same.

Thermally expandable microspheres can have a shell formed of a thermoplastic polymer encapsulating a foaming agent. When the temperature reaches the softening temperature of the thermoplastic polymer of the shell, the shell starts to soften. At the same time, the foaming agent starts to expand as the vapor pressure increases within the shell.

Thermally expandable microspheres are typically very small, and the shell enclosing the expandable foaming agent acts like a capsule. Therefore, the thermally expandable microspheres are also known as thermally expandable micro-capsules or thermally foaming micro-capsules.

Since the thermally expandable microspheres can expand significantly at low temperatures, the microsphere can form micro-balloons, or enclosed cell structures which can have empty inner parts and thin outer layers. Thermally expandable microspheres can be light weight and offer good insulating, soundproofing, shock absorbing, and peel strength properties, and thus are used in many different fields.

U.S. Patent Nos. 3,615,972, 3,945,956, and 6,509,384, and JP Patent Publication Nos. 1987-286534, 1993-015499, 1997-019635, 1998-058933, 2002-320843, 2003-001099, and 2005-232274 are directed to various thermally expandable microspheres encapsulating a foaming agent.

In the above documents, the thermally expandable microspheres generally include a thermoplastic resin for the shell material, such as an acrylic copolymer, an acrylonitrile copolymer, a vinylidene chloride copolymer, and the like, and a hydrocarbon for the foaming material, such as butane, pentane, hexane, heptane, and the like.

The thermally expandable microspheres are generally prepared using suspension polymerization methods. The shell can be formed by dispersing the foaming agent and polymerizable compounds including polymerizable monomers into incompatible liquids such as water. The shell forms a thin layer encapsulating the foaming agent. In the suspension polymerization, both the foaming agent and polymerizable compounds including the polymerizable monomers can be suspended by continuous stirring or by adding a stabilizer such as polyvinyl alcohol or methyl cellulose. The suspension polymerization can form a polymer with a spherical shape.

It can be important that the thermally expandable microspheres have an even or uniform microsphere diameter. If thermally expandable microspheres have an uneven diameter, it can be difficult to achieve a uniform foam structure since the initiation temperature and degree of expansion are not consistent. There is an increasing demand for thermally expandable microspheres with an even diameter as the number of applications for thermally expandable microspheres increases.

Since thermally expandable microspheres can be prepared by suspension polymerization, particle size distribution of the final microspheres can depend on the particle size distribution of the initial emulsion droplets.

Conventional suspension polymerization methods can control particle size distribution by using a mixer blade, controlling the rotational rate of a spreader, adding a dispersant, or controlling dispersant content. However, it can be difficult to prepare thermally expandable microspheres having a narrow particle size distribution without such process modifications. Therefore, there is a need for a process for preparing thermally expandable microspheres having an even or uniform diameter.

Conventional suspension polymerization methods used to narrow the particle size distribution of the thermally expandable microspheres can have problems, such as processing complexity and lowered productivity and yield.

JP Patent Publication No. 2004-32854 discloses a method of polymerizing a reactive surface active agent including an unsaturated ethylene group with monomers to prepare thermally expandable microspheres which have a narrow particle size distribution. However, the reactive surface active agent can exist on the monomer droplets as well as be water-soluble. Therefore, the surface active agent may not sufficiently exhibit the desired effect of the reactive groups. Further, the use of surface active agents may result in the production of a large number of excessively small particles.

JP Patent Publication No. 2005-103469 discloses a method of adding a supplementary dispersant when the degree of conversion reaches 90% to prepare thermally expandable micro-capsules which have a narrow particle size distribution. The amount of the supplementary dispersant is the same as the amount of the dispersant added into the aqueous dispersion medium. However, the method is complex because it adds a supplementary dispersant. It also can be difficult to provide good whiteness for applications such as paper coatings and the like, since the amount of dispersant is increased when the number of the final thermally expandable microspheres is not enough.

JP Patent Publication No. 2003-305360 discloses a method of dispersing a polymerizable compound using multiple plate elements having multiple holes to prepare thermally expandable micro-capsules with a narrow particle size distribution. However, this method requires specific equipment, and productivity and yield can be limited.

It is the object of the present application to overcome above problems.

This object has been achieved by the provision of thermally expandable microspheres which can have an even or uniform microsphere diameter with minimal or no loss of foaming characteristics. The present invention further provides a method for making the thermally expandable microspheres.

In an exemplary embodiment of the present invention the thermally expandable microspheres comprise a thermoplastic polymer shell including a long-chain crosslinking agent having a weight average molecular weight between cross-linking sites of more than about 500; and a core including a foaming agent. In an exemplary embodiment of the present invention, the long-chain crosslinking agent may have a weight average molecular weight between cross-linking sites of more than about 700.

The thermoplastic polymer shell can be made of a polymerizable compound, such as a polymerizable monomer. The thermoplastic polymer shell can include the long-chain crosslinking agent in an amount of about 0.1 to about 8 parts by weight, based on about 100 parts by weight of the polymerizable compound.

Examples of the long-chain crosslinking agent can include without limitation polyethylene glycol di(meth)acrylate, polypropylene glycol di(meth)acrylate, polytetramethylene glycol, polyol di(meth)acrylate, aliphatic urethane (meth)acrylate, aliphatic urethane (meth)acrylate, polyester (meth)acrylate, epoxy (meth)acrylate, alkoxy bisphenol A di(meth)acrylate, polybutadiene di(meth)acrylate, and the like, and combinations thereof.

The thermally expandable microsphere can have a volume mean diameter of about 5 to about 50 $\mu$m before expanding. The coefficient of variation of the volume mean diameter of the thermally expandable microspheres can be about 10 to about 50%.

The present invention also provides a method for preparing the thermally expandable microspheres. The thermally expandable microspheres can be prepared by polymerizing a polymerizable compound in the presence of a foaming agent and a long-chain crosslinking agent having a weight average molecular weight between cross-linking sites of more than about 500. The thermally expandable microsphere can include the long-chain crosslinking agent in an amount of about 0.1 to about 8 parts by weight, per about 100 parts by weight of the polymerizable compound.

The present invention now will be described more fully hereinafter in the following detailed description of the invention, in which some, but not all embodiments of the invention are described. Indeed, this invention may be embodied in many different forms and should not be construed as limited to the embodiments set forth herein; rather, these embodiments are provided so that this disclosure will satisfy applicable legal requirements.

The present invention provides thermally expandable microspheres comprising a shell including a thermoplastic polymer and a long-chain crosslinking agent having a weight average molecular weight between cross-linking sites of more than about 500; and a core including a foaming agent.

The long-chain crosslinking agent has a weight average molecular weight between cross-linking sites of more than about 500, and contains two or more polymerizable functional groups.

The weight average molecular weight between cross-linking sites is defined as a weight average molecular weight of chains of the crosslinking agent between polymerizable functional groups. In exemplary embodiments the long-chain crosslinking agents of the present invention can have a weight average molecular weight between cross-linking sites of more than about 700. If the long-chain crosslinking agents contain two or more polymerizable functional groups and have the same average length between all of the polymerizable functional groups resulting from a symmetric chemical structure, the long-chain crosslinking agents having a weight average molecular weight between cross-linking sites of more than about 500 of the present invention satisfy the following Equation 1.

Equation 1

Total weight molecular weight of the long-chain crosslinking agents (Mw) $\div$ the number of polymerizable functional groups $\times 2 \geq 500$

The thermoplastic polymer shell can be made of a polymerizable compound, such as a polymerizable monomer. The long-chain crosslinking agents of the present invention having a weight average molecular weight between cross-linking sites of more than about 500 can be included in the thermoplastic polymer shell of the thermally expandable microspheres in an amount of about 0.1 to about 8 parts by weight, for example about 0.3 to about 6 parts by weight, based on about 100 parts by weight of the polymerizable compound. In some embodiments, the thermoplastic polymer shell may include the long-chain crosslinking agent having a weight average molecular weight between cross-linking sites of more than about 500 in an amount of about 0.1, 0.2, 0.3, 0.4, 0.5, 0.6, 0.7, 0.8, 0.9, 1, 2, 3, 4, 5, 6, 7, or 8 parts by weight. Further, according to some embodiments of the present invention, the amount of the long-chain crosslinking agent having a weight average molecular weight between cross-linking sites of more than about 500 can be in a range from about any of the foregoing amounts to about any other of the foregoing amounts.

If the amount of the long-chain crosslinking agent is less than about 0.1 parts by weight, it may be difficult to narrow the particle size distribution, because of a weakened thickening effect of the resultant emulsion droplets. In contrast, if the amount of the long-chain crosslinking agent is more than about 8 parts by weight, foaming can deteriorate because of the excessively increased cross-link density which prevents the resin for having the proper orientation when foaming occurs.

Long-chain crosslinking agents useful in the present invention are not limited so long as the crosslinking agents have a weight average molecular weight between cross-linking sites of more than about 500. Examples of crosslinking agents having a weight average molecular weight between cross-linking sites of more than about 500 may include without limitation polyethylene glycol di(meth)acrylate, polypropylene glycol di(meth)acrylate, polytetramethylene glycol, polyol di(meth)acrylate, aliphatic urethane (meth)acrylate, aromatic urethane (meth)acrylate, polyester (meth)acrylate, epoxy (meth)acrylate, alcoxy bisphenol A di(meth)acrylate, polybutadiene di(meth)acrylate, and the like, and combinations thereof.

In exemplary embodiments, polyol di(meth)acrylate, aliphatic urethane (meth)acrylate, and/or aromatic urethane (meth)acrylate can be used to produce thermally expandable microspheres which foam at a lower temperature.

The thermally expandable microspheres are generally prepared by suspension polymerization methods. The suspension polymerization can include mechanically dispersing polymerizable compounds including polymerizable monomers and foaming agent into incompatible liquids such as water. Thereafter, the dispersed monomer droplets are polymerized.

The particle size distribution of the final thermally expandable microspheres depends on microemulsion droplets which are generated in a mechanical dispersion step using a mixer blade or rotational spreader.

Dispersed emulsion droplets form large diameter particles by cohesion or combination with other droplets during a heating step until the polymerization is initiated, or during the reaction process, and ultimately, the final thermally expandable microspheres may not have a uniform particle size distribution.

The present inventors have realized that, if the viscosity of the polymerizable monomer compounds is increased, the stability of the emulsion can be improved and the cohesion or the combination of droplets can be limited or minimized. Therefore, the particle size distribution of the final thermally expandable microspheres can have excellent uniformity.

As a result, the present inventors have developed thermally expandable microspheres having an even (uniform) diameter without degradation of foaming characteristic by using the long-chain crosslinking agents having a weight average molecular weight between cross-linking sites of more than about 500 to increase the viscosity of polymerizable monomers.

It is possible to obtain stable emulsion droplets without adding the long-chain crosslink agents having a weight average molecular weight between cross-linking sites of more than about 500 to control the viscosity of the polymerizable compounds. However, the foaming characteristics can be deteriorated, i.e. the resin can easily tear when foaming occurs. With regard to the deterioration of the foaming characteristics, the mechanical properties of the polymer can deteriorate with the monomer are not cross linked.

In addition, even if short-chain crosslinking agents are used instead of the long-chain crosslinking agents, it is possible to obtain good foaming characteristic. However, if the chain lengths of the crosslinking agents are short, it is difficult or impossible to control the viscosity of the polymerizable monomer compounds because the crosslinking agents act merely as an additive and not as a main component of the polymerizable compounds.

Finally, it is difficult to stabilize the emulsion droplets. Therefore, the particle size distribution range of the final microspheres can have a wide range.

If short-chain crosslinking agents having a weight average molecular weight between cross-linking sites of less than about 500 are used instead of the long-chain crosslinking agents having a weight average molecular weight between cross-linking sites of more than about 500, the foaming characteristics deteriorate due to excessively increased crosslinking density of the created polymer resins.

Further, if small amounts of the crosslinking agents are used to prevent increased cross-linking density, this may not be effective to narrow the particle size distribution because the polymerizable compounds do not have a desired viscosity and it is can be difficult to increase the stability of the droplets.

The long-chain crosslinking agents having a weight average molecular weight between cross-linking sites of more than about 500 of the present invention can increase the viscosity of the polymerizable compounds, since the molecular weight between cross-linking sites is large enough to stabilize the droplets without excessively increasing the crosslinking density.

As a result, it is possible to decrease the Tg of the polymer resin which comprises the structure of the main chain without disturbing the characteristics of the orientation. Further, it can be possible to provide high foaming at a lower temperature.

The thermoplastic polymer of the shell can have a glass transition temperature (Tg) of about 30 to about 120°C. Therefore, the foaming initiates at a temperature in the range of about 30 to about 120°C.

In some embodiments, the glass transition temperature (Tg) of the thermoplastic polymer of the shell can be about 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, or 120 °C. Further, according to some embodiments of the present invention, the glass transition temperature (Tg) of the thermoplastic polymer of the shell can range from about any of the foregoing temperatures to about any other of the foregoing temperatures.

If the long-chain crosslinking agents having a weight average molecular weight between cross-linking sites of more than about 500 self-polymerizes to form a homopolymer, it is possible to provide a flexible material which has a Tg of less than 0°C depending on the structure of the chains.

The Tg of the total thermoplastic resin including the long-chain crosslinking agents becomes lower, since the long-chain crosslinking agents have a Tg of less than 0°C.

In this way, adding the long-chain crosslinking agents having a weight average molecular weight between cross-linking sites of more than about 500 can have the effect of decreasing the Tg of the thermoplastic resin which comprises the shell of the thermally expandable microspheres. Therefore, the thermoplastic resin can foam under low temperature conditions.

Any thermoplastic polymer resin with a Tg within the above range can be used without limit as a shell material.

Examples of thermoplastic polymer resins useful as a shell material in accordance with the present invention may include without limitation acrylic resins, acrylonitrile resins, vinylidene chloride resins, ABS resins, polyamides, polycarbonates, polyolefins such as polyethylene and polypropylene, polyesters such as polyethylene terephthalate, polyimides, polyphenylene oxides, polystyrenes, polysulfones, vinyl chlorides, acetal resins, cellulose esters, cellulose acetates, polyvinylidene fluorides, methyl pentene polymers, and the like, and combinations thereof.

The foaming agent does not dissolve the polymer comprising the shell of the thermally expandable microsphere. The foaming agent can have a boiling point below about 100°C.

Generally, the foaming agent can be a liquid material having a low boiling point such as volatile expandable agent. However, a solid material which can generate gas by pyrolysis also can be used.

Examples of foaming agents useful in the present invention may include without limitation butane, pentane, hexane, heptanes, halogenated methane, tetra alkyl silane, hydrofluoroether, AIBN, and the like, and combinations thereof.

In the present invention, the thermally expandable microspheres include the foaming agent in an amount of about 1 to about 60 wt%, for example about 5 to about 50 wt%, based on the total weight of the thermally expandable microspheres. In some embodiments, the thermally expandable microspheres include the foaming agent in an amount of about 1,2, 3, 4, 5, 6, 7, 8, 9, 10, 11, 12,13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, or 60 wt%. Further, according to some embodiments of the present invention, the amount of the foaming agent can range from about any of the foregoing amounts about any other of the foregoing amounts.

The thermally expandable microspheres of the present invention can have a mean volume diameter ranging from about 1 to about 100 $\mu$m, for example about 5 to about 50 $\mu$m, and as another example about 20 to about 30 $\mu$m, before foaming. In some embodiments, the thermally expandable microspheres can have a mean volume diameter of about 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, or 100 $\mu$m. Further, according to some embodiments of the present invention, the size of the thermally expandable microspheres can range from about any of the foregoing sizes to about any other of the foregoing sizes.

If the mean volume diameter is larger than about 100 $\mu$m, the shell can be very thick, which can limit or minimize rapid thermal expansion. If the mean volume diameter is smaller than about 1 $\mu$m, the shell can be very thin, which can make it difficult to stably encapsulize the volatile foaming agent.

Further, the thermally expandable microspheres of the present invention can have a coefficient of variation (C.V.) of the mean volume diameter of about 10 to about 50%, for example less than about 45%. In some embodiments, the thermally expandable microspheres can have a coefficient of variation (C.V.) of about 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50%. Further, according to some embodiments of the present invention, the coefficient of variation (C.V.) can range from about any of the foregoing amounts to about any other of the foregoing amounts.

The thermally expandable microspheres should have an even or uniform diameter to provide desirable properties. The coefficient of variation (C.V.) of the microsphere diameter is the standard used to determine if the microspheres have an even or uniform diameter.

If the coefficient of variation (C.V.) of the microsphere diameter is more than about 50%, the microspheres can have uneven diameters and thus microspheres may not foam at the same time, which can result in different foaming rates. Therefore, it is difficult to provide a uniformly foaming material for various technical fields.

The thermally expandable microspheres of the present invention can exhibit high foaming capability at low temperatures. The maximum expansion temperature of the thermally expandable microspheres (Tmax) can be about 80 to about 160°C, for example about 80 to about 140°C, and the maximum displacement of the thermally expandable microsphere (Dmax) can be more than about 1000 μm, for example more than about 1500 μm

In some embodiments, the expansion temperature (Tmax) of the thermally expandable particles can be about 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, or 160°C. Further, according to some embodiments of the present invention, the maximum expansion temperature (Tmax) of the thermally expandable particles can range from about any of the foregoing temperatures to about any other of the foregoing temperatures.

The thermally expandable microspheres of the present invention having high foaming characteristics can be used in a variety of diverse products which require lightness, insulation, soundproofing, peel strength, shock absorption, and the like.

The present invention provides a method of preparing the thermally expandable microspheres. The thermally expandable microspheres are prepared by polymerizing polymerizable monomer compounds including the long-chain crosslinking agent having a weight average molecular weight between cross-linking sites of more than about 500.

In exemplary embodiments of the present invention, the thermally expandable microspheres are prepared by suspension polymerization. The suspension polymerization is performed by mixing the polymerizable monomer compounds and foaming agent. The next step is adding the long-chain crosslinking agent having a weight average molecular weight between cross-linking sites of more than about 500 to control the viscosity of the mixture, and the final step is mechanically dispersing the total mixture.

In the process, it is possible to prepare emulsified polymerizable monomer compounds in an aqueous dispersing media by separately adding the polymerizable monomer, foaming agent and the long-chain crosslinking agent having a weight average molecular weight between cross-linking sites of more than about 500 into an aqueous dispersing media. The polymerizable monomer compound, however, can also be first mixed with the foaming agent and long-chain cross-linking agent and the thus prepared mixture can be thereafter added into the aqueous dispersing media.

One or more additives, such as but not limited to an initiator, a dispersing agent, a suspension stabilizer, and the like, and combinations thereof, can be added into the polymerizable monomer compounds by any method well-known to those having ordinary skill in the art.

Examples of the polymerizable monomer may include, but are not limited to, unsaturated nitrile monomers such as acrylonitrile, methacrylonitrile, and the like; (meth)acrylic acid alkyl esters such as but not limited to methyl methacrylate, methyl acrylate, ethyl acrylate, propyl acrylate, n-butyl acrylate, iso-butyl acrylate, t-butyl acrylate, 2-ethyl-hexyl acrylate, n-octyl acrylate, lauryl acrylate, stearyl acrylate, and the like; other (meth)acrylates such as 2-hydroxy ethyl acrylate, polyethylene glycol acrylate, methoxy polyethylene glycol acrylate, glycidyl acrylate, dimethyl amino-ethyl acrylate, diethyl amino-ethyl acrylate, and the like; vinylidene chloride; butadiene; aromatic vinyl compounds such as styrene, p- or m- methyl-styrene, p- or m- ethyl-styrene, p- or m-chlorostyrene, p- or m- chloro-methyl-styrene, styrene sulfonate, p- or m- t-butoxy styrene, and the like; vinyl acetate; vinyl propionate; vinyl butyrate; vinyl ether; aryl butyl ether; aryl glycidyl ether; unsaturated carboxyl acids such as (meth)acrylic acid or maleic acid; alkyl(meth)acrylamides, and the like, and combinations thereof.

Combinations of the polymerizable monomers can be used, based on the desired properties of the thermoplastic polymer, such as combustion temperature, thermal resistance, chemical resistance, and the like. For example, a copolymer including vinylidene chloride can have good gas barrier properties, and a copolymer including a nitrile monomer (s) in an amount of more than about 80wt% can have good thermal resistance as well as good chemical resistance.

Polymerization of the polymerizable monomer compound can be photo- and/or thermally initiated.

A polymerization initiator can also be used. The polymerization initiator may include any known initiator such as but not limited to peroxide or nitrogen compounds. Examples of peroxide initiators include without limitation benzoyl peroxide, lauryl peroxide, o-chloro benzoyl peroxide, o-methoxy benzoyl peroxide, t-butyl peroxy-2-ethyl hexanoate, t-butyl peroxy iso-butyrate, 1,1,3-3-tetra methyl butyl peroxy-2-ethyl hexanate, di-2-ethyl hexyl peroxy dicarbonate, dioxtanoyl peroxide, di-decanoyl peroxide, and the like, and combinations thereof. Examples of azo compounds include without limitation 2,2'-azo bis isobutylonitrile, 2,2'-azobis(2-methylbutyronitrile), 2,2'-azobis(2,4-dimethylvaleronitrile), and the like, and combinations thereof.

The polymerization initiater can be included in an amount of about 0.1 to about 10 parts by weight, based on about 100 parts by weight of the polymerizable compounds.

The polymerizable compounds further may include a dispersing stabilizer. The dispersing stabilizer may be any known stabilizer, such as but not limited to nonaqueous inorganic dispersing stabilizers such as colloidal silica, calcium oxalate, magnesium oxide, aluminum hydroxide, calcium carbonate, magnesium carbonate, calcium phosphate, magnesium phosphate, aluminum phosphate, calcium pyrolinate, calcium pyrophosphate, aluminum pyrophosphate, zinc pyrophosphate, alumina sol, and the like, and combinations thereof.

The dispersing stabilizer may be employed singly or as a combination of two or more thereof depending on the diameter of the thermally expandable microsphere and polymerizable stability The dispersing stabilizer can be included in an amount of about 0.1 to about 20 parts by weight, based on about 100 parts by weight of the polymerizable compounds.

An auxiliary agent can be used for dispersing stability as well as the dispersing stabilizer. Examples of the auxiliary agent for dispersing stability may include, but are not limited to, aqueous polymers, cationic surfactants, anionic surfactants, amphoteric surfactants, nonionic surfactants, and the like, and combinations thereof.

The auxiliary agent for dispersing stability may be employed singly or as a combination of two or more thereof. In exemplary embodiments, the auxiliary agent can be an aqueous polymer type auxiliary agent, such as but not limited to products of a condensation reaction between diethanol amine and aliphatic dicarboxyl acid, gelatins, starches, polyvinylpyrolidone, methyl cellulose, hydroxyethyl, cellulose, carboxymethyl cellulose, polyethylene oxide, poly vinyl alcohol, and the like, and combinations thereof.

The auxiliary agent for dispersion stability can be used in an amount of about 0.0005 to about 2 parts by weight, based on about 100 parts by weight of polymerizable compounds.

The selected components of polymerizable compound, the foaming agent, the long-chain crosslinking agent, the initiator, the dispersing stabilizer, and other agents if present may be easily mixed by those skilled in the art using known methods.

The invention may be better understood by reference to the following examples which are intended for the purpose of illustration and are not to be construed as in any way limiting the scope of the present invention, which is defined in the claims appended hereto.

## EXAMPLES

### Preparation of the thermal expandable microsphere:

#### Example 1

An emulsified mixture is prepared by mixing about 120 parts by weight of acrylonitrile, about 24 parts by weight of methacrylonitrile, about 24 parts by weight of methyl methacrylate, about 72 parts by weight of ethyl acrylate, about 0.4 trimethylolpropane trimethacrylate, about 1.2 parts by weight of polyethylene glycol diacrylate having a weight average molecular weight of about 2,000, about 30 parts by weight of normal pentane, and about 30 parts by weight of isopentane.

An aqueous mixture is prepared by mixing about 180 parts by weight of sodium chloride, about 54 parts by weight of colloidal silica with 30% sold content (Ludox-AM), about 0.8 parts by weight of poly vinyl pyrrolidone, and about 0.02 parts by weight of sodium nitrite with about 665 parts by weight of ion-exchanged water. An aqueous dispersed solution is prepared by controlling the pH of the aqueous mixture to a pH of 3.0 by adding 1 mole of hydrochloric solution as a buffer solution.

A suspended solution is prepared by dispersing the emulsified mixture and the aqueous dispersed solution by stirring at 7,000 rpm with a homomixer for 2 minutes. Immediately after stirring, the suspended solution is placed in the 1.5L pressurized reactor, and the reactor is pressurized to an initial pressure of $3kgf/cm^2$ by purging with nitrogen gas. Thereafter, polymerization is performed for 20 hours at 60°C. After finishing the polymerization, the thermally expandable microspheres are recovered via the steps of filtering, washing, and drying.

#### Examples 2-15 and Comparative Examples 1-7

Examples 2-15 and Comparative Examples 1-7 are prepared using the same preparation process as Preparation Example 1 except using the components shown in Table 1-3.

#### Analysis of the thermally expandable microspheres

#### Characteristics of particle size distribution

The particle size distribution of the microspheres are measured by a laser diffraction analysis instrument LS 13320 produced by Beckman Coulter Corporation. The mean diameter is measured as a volume mean diameter, and the particle size distribution is calculated as a value of C.V. (standard deviation/mean diameter) X 100%.

### Characteristics of foaming

The foaming characteristics of the thermally expandable microspheres are measured using the thermomechanical analyzer TMA Q-400 produced by TA Instrument Corporation.

The sample is prepared from 1.0mg of the thermally expandable microspheres which are contained in an aluminum pan having a diameter of 6.7mm diameter and a depth of 4.5mm. Thereafter, the aluminum pan is sealed using an aluminum pan with a diameter of 6.5 mm and a depth of 4.0 mm. Using a TMA Expansion Probe type, the temperature of the sample is increased from ambient temperature to 200°C at a rate of 5°C/min while applying a force of 0.5N with the probe. The displacement of the probe vertically is measured to analyze foaming characteristics.

- The initial temperature of expansion (Tstart): the temperature (°C) when displacement of the probe is initiated.

- The maximum temperature of foaming (Tmax): the temperature (°C) when displacement of the probe reaches its maximum.

- The maximum of foaming displacement (Dmax): the displacement ($\mu$m) when displacement of the probe reaches its maximum.

Table 1

| | | | Examples | | | | | Comp. Examples | | |
|---|---|---|---|---|---|---|---|---|---|---|
| | | | 1 | 2 | 3 | 4 | 5 | 1 | 2 | 3 |
| monomer | | AN | 120 | 120 | 120 | 120 | 120 | 120 | 120 | 120 |
| | | MAN | 24 | 24 | 24 | 24 | 24 | 24 | 24 | 24 |
| | | MMA | 24 | 24 | 24 | 24 | 24 | 24 | 24 | 24 |
| | | MA | - | - | - | - | - | - | - | - |
| | | EA | 72 | 72 | 72 | 72 | 72 | 72 | 72 | 72 |
| | | VDC | - | - | - | - | - | - | - | - |
| cross link agent | | TMPTMA | 0.4 | 0.4 | 0.4 | 0.4 | 0.4 | 0.8 | 0.8 | 1.6 |
| | | PEGDA | 1.2 | - | - | - | - | - | - | - |
| | | PPGDA | - | 1.2 | - | - | - | - | - | - |
| | | EB 230 | - | - | 1.2 | - | 1.2 | - | - | - |
| | | EB 270 | - | - | - | 1.2 | - | - | - | - |
| initiator | | OPP | 2.4 | 2.4 | 2.4 | 2.4 | - | 2.4 | - | 2.4 |
| | | AIBN | - | - | - | - | 2.4 | - | 2.4 | - |
| foaming agent | | n-PT | 30 | 30 | 30 | 30 | 30 | 30 | 30 | 30 |
| | | Iso-PT | 30 | 30 | 30 | 30 | 30 | 30 | 30 | 30 |
| Characteristics of particle size distribution | | mean diameter ($\mu$m) | 23.4 | 29.3 | 22.6 | 24.0 | 26.1 | 32.1 | 34.4 | Fail |
| | | C.V. (%) | 43.8 | 44.2 | 41.0 | 46.6 | 44.9 | 64.8 | 69.7 | Fail |

(continued)

| | | Examples | | | | | Comp. Examples | | |
|---|---|---|---|---|---|---|---|---|---|
| | | 1 | 2 | 3 | 4 | 5 | 1 | 2 | 3 |
| Characteristics of foaming | Tstart (°C) | 85 | 96 | 89 | 95 | 90 | 84 | 85 | Fail |
| | Tmax (°C) | 113 | 117 | 114 | 115 | 114 | 111 | 115 | Fail |
| | Dmax (°C) | 2,040 | 1,877 | 2,227 | 2,085 | 2,130 | 2,153 | 2,088 | Fail |

AN: Acrylonitrile
MAN: Methacrylonitrile
MMA: Methyl methacrylate
MA: Methyl acrylate
EA: Ethyl acrylate
VDC: Vinylidene chloride
TMPTMA: Trimethylolpropane trimethacryate (weight average molecular weight: 500, weight average molecular weight between cross-linking sites: less than 100)
PEGDA: Polyethylene glycol diacrylate (weight average molecular weight between cross-linking sites: 700)
PPGDA: Polypropylene glycol diacrylate (weight average molecular weight between cross-linking sites: 900)
EB 230: Urethane acrylate (Ebecryl 230 produced by Cytec Corporation; weight average molecular weight between cross-linking sites: 5000)
EB 270: Urethane acrylate (Ebecryl 270 produced by Cytec Corporation; weight average molecular weight between cross-linking sites: 5000)
OPP: Di-2-ethylhexyl peroxy dicarbonate
AIBN: 2,2'-Azobisisobutyronitrile
n-PT: n-Pentane
iso-PT: iso-Pentane

As represented in Table 1, Examples 1-4 which include a mixture of a general crosslinking agent (TMPTMA) and a long-chain crosslinking agent having a weight average molecular weight between cross-linking sites of more than about 500 show remarkably improved foaming characteristics, and have narrow particle size distribution as compared with Comparative Examples 1-3.

Moreover, foaming never occurred due to excessive crosslink density for Comparative Example 3 which includes the same amount of TMPTMA as Examples 1-4.

Comparing Comparative Examples 1 and 2, the particle size distribution becomes narrower when AIBN is used as an initiator instead of OPP.

However, Example 5 which uses AIBN as an initiator and which includes a mixture of a general crosslinking agent (TMPTMA) and a long-chain crosslinking agent having a weight average molecular weight between cross-linking sites of more than about 500 shows excellent foaming characteristics, and has narrow particle size distribution.

Table 2

| | | Examples | | | | | Comp. Examples | |
|---|---|---|---|---|---|---|---|---|
| | | 6 | 7 | 8 | 9 | 10 | 4 | 5 |
| monomer | AN | 120 | 96 | 96 | 84 | 60 | 120 | 84 |
| | MAN | 24 | 24 | 24 | 12 | 12 | 24 | 12 |
| | MMA | 24 | 24 | 24 | 24 | 24 | 24 | 24 |
| | MA | 72 | 72 | - | 24 | 24 | 72 | 24 |
| | EA | - | 24 | 96 | - | - | - | - |
| | VDC | - | - | - | 96 | 120 | - | 96 |

(continued)

| | | Examples | | | | | Comp. Examples | |
|---|---|---|---|---|---|---|---|---|
| | | 6 | 7 | 8 | 9 | 10 | 4 | 5 |
| cross link agent | TMPTMA | 0.4 | 0.4 | 0.4 | 0.4 | 0.4 | 0.8 | 0.8 |
| | PEGDA | - | - | - | - | - | - | - |
| | PPGDA | - | - | - | - | - | - | - |
| | EB 230 | 1.2 | 1.2 | 1.2 | 1.2 | 1.2 | - | - |
| | EB 270 | - | - | - | - | - | - | - |
| initiator | OPP | 2.4 | 2.4 | 2.4 | - | - | 2.4 | - |
| | AIBN | - | - | - | 2.4 | 2.4 | - | 2.4 |
| foaming agent | n-PT | 30 | 30 | 30 | 28 | 28 | 30 30 | 28 |
| | Iso-PT | 30 | 30 | 30 | 28 | 28 | 30 | 28 |
| Characteristics of particle size distribution | mean diameter ($\mu$m) | 30.1 | 26.5 | 21.8 | 19.9 | 20.6 | 41.5 | 24.6 |
| | C.V. (%) | 47.4 | 45.3 | 41.1 | 32.7 | 34.0 | 74.5 | 51.9 |
| Characteristics of foaming | Tstart (°C) | 91 | 88 | 74 | 82 | 78 | 94 | 83 |
| | Tmax (°C) | 121 | 116 | 97 | 113 | 105 | 125 | 113 |
| | Dmax (°C) | 2,217 | 2,038 | 1,910 | 2,345 | 2,116 | 2,556 | 2,409 |

Examples 6 to 10 which include a long-chain crosslinking agent having a weight average molecular weight between cross-linking sites of more than about 500, regardless of monomer composition, have a narrow particle size distribution as compared with Comparative Examples 4 and 5 which do not include long-chain crosslinking agent.

Table 3

| | | Examples | | | | | Comp. Examples | |
|---|---|---|---|---|---|---|---|---|
| | | 11 | 12 | 13 | 14 | 15 | 6 | 7 |
| monomer | AN | 120 | 120 | 120 | 120 | 120 | 120 | 120 |
| | MAN | 24 | 24 | 24 | 24 | 24 | 24 | 24 |
| | MMA | 24 | 24 | 24 | 24 | 24 | 24 | 24 |
| | MA | - | - | - | - | - | - | - |
| | EA | 72 | 72 | 72 | 72 | 72 | 72 | 72 |
| | VDC | - | - | - | - | - | - | - |
| cross link agent | TMPTMA | 0.4 | - | 0.4 | 0.2 | - | - | - |
| | PEGDA | 2.4 | 7.2 | - | - | - | 24 | - |
| | PPGDA | - | - | - | - | - | - | - |
| | EB 230 | - | 1.2 | 2.4 | 7.2 | 12 | - | 24 |
| | EB 270 | - | - | - | - | - | - | - |
| initiator | OPP | 2.4 | 2.4 | 2.4 | 2.4 | 2.4 | 2.4 | 2.4 |
| | AIBN - | - | - | - | - | - | - | - |
| foaming agent | n-PT | 30 | 30 | 30 | 30 | 30 | 30 | 30 |
| | Iso-PT | 30 | 30 | 30 | 30 | 30 | 30 | 30 |

(continued)

| | | Examples | | | | | Comp. Examples | |
|---|---|---|---|---|---|---|---|---|
| | | 11 | 12 | 13 | 14 | 15 | 6 | 7 |
| Characteristics particle size distribution | mean of (μm) diameter (μm) | 22.5 | 22.7 | 20.5 | 20.9 | 21.2 | 30.8 | 29.7 |
| | C.V. (%) | 41.4 | 41.0 | 42.4 | 42.0 | 40.3 | 73.3 | 59.1 |
| Characteristics of foaming | Tstart (°C) | 86 | 85 | 91 | 88 | 90 | 95 | 93 |
| | Tmax(°C) | 113 | 112 | 117 | 113 | 114 | 131 | 127 |
| | Dmax (°C) | 2,009 | 2,120 | 2,133 | 2,244 | 2,341 | 973 | 1,221 |

Examples 11-15 which include amounts of a long-chain crosslinking agent having a weight average molecular weight between cross-linking sites of more than about 500 within the range of the invention exhibit remarkably improved foaming characteristics, and have a narrow particle size distribution as compared with Comparative Examples 6-7 which include the long-chain crosslinking agent in an amount greater than the amounts in accordance with the present invention.

Many modifications and other embodiments of the invention will come to mind to one skilled in the art to which this invention pertains having the benefit of the teachings presented in the foregoing descriptions. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation, the scope of the invention being defined in the claims.

This application claims priority from Korean Patent Application No. 2009-114763 filed on November 25, 2009, the disclosure of which is incorporated herein by reference in its entirety.

## Claims

1.  A thermally expandable microsphere having a core-shell structure comprising:

    a shell comprising a thermoplastic polymer formed of a polymerizable compound and a long-chain crosslinking agent having a weight-average molecular weight between cross-linking sites of more than about 500; and
    a core comprising a foaming agent.

2.  The thermally expandable microsphere of claim 1, wherein the long-chain crosslinking agent has a weight average molecular weight between cross-linking sites of more than about 700.

3.  The thermally expandable microsphere of claim 1 or 2, wherein the long-chain crosslinking agent includes polymerizable functional groups and satisfies the following equation 1:

    Total weight molecular weight of the long-chain crosslinking agent (Mw) ÷ the number of polymerizable functional groups × 2 ≥ 500.

4.  The thermally expandable microsphere of any of claims 1 to 3, wherein the shell includes the long-chain crosslinking agent in an amount of about 0.1 to about 8 parts by weight, per 100 parts by weight of the polymerizable compound.

5.  The thermally expandable microsphere of any of claims 1 to 4, wherein the long-chain crosslinking agent comprises polyethylene glycol di(meth)acrylate, polypropylene glycol di(meth)acrylate, polytetramethylene glycol, polyol di (meth)acrylate, aliphatic urethane (meth)acrylate, aliphatic urethane (meth)acrylate, polyester (meth)acrylate, epoxy (meth)acrylate, alcoxy bisphenol A di(meth)acrylate, polybutadiene di(meth)acrylate, and combinations thereof.

6.  The thermally expandable microsphere of any of claims 1 to 5, wherein the thermoplastic polymer has a foaming temperature in the range of about 30°C to about 120°C.

7.  The thermally expandable microsphere of any of claims 1 to 6, wherein the thermoplastic polymer comprises an acrylic resin, an acrylonitrile resin, a vinylidene chloride resin, ABS resin, polyamide, polycarbonate, polyethylene, polyethylene terephthalate, polyimide, polyphenylene oxide, polypropylene, polystyrene, polysulfone, vinyl chloride, acetal, cellulose ester, cellulose acetate, polyvinylidene fluoride, methyl pentene polymer or a combination thereof.

8. The thermally expandable microsphere of any of claims 1 to 7, wherein the foaming agent comprises butane, pentane, hexane, heptane, halogenated methane, tetra alkyl silane, hydrofluoroether, azobisisobutyronitrile (AIBN), or a combination thereof.

9. The thermally expandable microsphere of any of claims 1 to 8, wherein the thermally expandable microsphere has a volume mean diameter of between about 5 $\mu$m and about 50$\mu$m.

10. The thermally expandable microsphere of any of claims 1 to 9, wherein the thermally expandable microsphere havs a displacement coefficient of between about 10% and about 50%.

11. The thermally expandable microsphere of any of claims 1 to 10, wherein the thermally expandable microsphere has a maximum foaming temperature (Tmax) of between about 80°C and about 160°C and a maximum foaming displacement (Dmax) of about 1000$\mu$m.

12. A process of preparing a thermally expandable microsphere, comprising polymerizing a polymerizable compound in the presence of a foaming agent and a long-chain crosslinking agent having a weight-average molecular weight between cross-linking sites of more than about 500.

13. The process of claim 12, wherein the long-chain crosslinking agent is included in an amount of about 0.1 to about 8 parts by weight, per 100 parts by weight of the polymerizable compound.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3615972 A
- US 3945956 A
- US 6509384 B
- JP 62286534 A
- JP 5015499 A
- JP 9019635 A
- JP 10058933 A
- JP 2002320843 A
- JP 2003001099 A
- JP 2005232274 A
- JP 2004032854 A
- JP 2005103469 A
- JP 2003305360 A
- KR 2009114763